# EUROPÄISCHE PATENTSCHRIFT

(11) **EP 1 013 534 B1**
(45) Veröffentlichungstag und Bekanntmachung des Hinweises auf die Patenterteilung: **18.09.2002**
(21) Anmeldenummer: 98123349.7
(22) Anmeldetag: 08.12.1998
(51) Int. Cl.: B62D 5/04, F16H 49/00

(54) **Elektrische Servolenkung, insbesondere für Kraftfahrzeuge**
Electrical power steering especially for motor vehicles
Direction assistée électrique en particulier pour véhicules à moteur

(43) Veröffentlichungstag der Anmeldung: 28.06.2000
(73) Patentinhaber: Ford-Werke Aktiengesellschaft, 50735 Köln (DE); FORD MOTOR COMPANY LIMITED, Brentwood, Essex CM13 3BW (GB); FORD FRANCE S. A., 92506 Rueil-Malmaison (FR); Ford Motor Company, Dearborn Michigan 48126 (US)
(72) Erfinder: Lorenz, Volker W., 51107 Köln (DE); Hein, Paul, 42653 Solingen (DE); Meckel, Herbert, 40699 Erkrath (DE); Boldt, Ekkehard, 50129 Bergheim (DE); Engels, Frank Peter, 42653 Solingen (DE)
(74) Vertreter: Drömer, Hans-Carsten, Dipl.-Ing.

(56) Entgegenhaltungen:
- EP-A- 0 093 888
- EP-A- 0 189 172
- EP-A- 0 403 234
- WO-A-98/12097
- DE-A- 3 545 788
- DE-A- 19 748 667

## Beschreibung

Die Erfindung bezieht sich auf eine elektrische Servolenkung, insbesondere für Kraftfahrzeuge der im Oberbegriff des Patentanspruches 1 erläuterten Art.

Aus der WO 98/12097 A1 ist eine elektrische Servolenkung bekannt, bei der ein Elektromotor ein koaxial zur Lenkwelle angeordnetes Spannungswellen- oder Pulsatorgetriebe antreibt, wobei der Stator des Elektromotors und der Stator des Pulsatorgetriebes im Kraftfahrzeug festgelegt sind und die Lenkwelle das Eingangselement und gleichzeitig das Ausgangselement des Pulsatorgetriebes bildet, das die verstärkte Lenkbewegung auf ein entsprechendes Lenkungsgetriebe weitergibt.

Das bekannte elektrische Lenkservogetriebe weist den Nachteil auf, daß der Stator des Elektromotors im Fahrzeug lagefest fixiert sein muß und zur lagefesten Fixierung des Stators des Pulsatorgetriebes im Fahrzeug eine steuerbare Verbindung bzw. Arretiervorrichtung vorgesehen werden muß, die z.B. in Form einer elektromagnetisch steuerbaren Kupplung ausgebildet sein kann.

Darüber hinaus weist das bekannte elektrische Lenkservogetriebe den weiteren Nachteil auf, daß es durch die Bauform des Elektromotors als Scheibenläufermotor und auch des Pulsatorgetriebes als Scheibengetriebe im Bereich der Lenkwelle eines Kraftfahrzeuges einen erheblichen radialen Einbauraum erforderlich macht.

Eine elektrische Servolenkung nach dem Oberbegriff des Anspruchs 1 ist aus der DE 19748667 bekannt, bei der ein Pulsatorgetriebe und ein Leiterplattenmotor koaxial auf einer Lenkachse angeordnet sind und die Lenkachse Lenkeingangswelle und Lenkausgangswelle verbindet. Der Ringrotor des Pulsatorgetriebes ist drehfest mit der Lenkachse und der Flexstator ist über eine elektromechanisch schaltbare Kupplung drehfest mit dem Lenkungsgehäuse verbunden. Ebenso drehfest mit dem Lenkungsgehäuse verbunden ist der Stator des Leiterplattenmotors. Der Rotor des Leiterplattenmotors treibt den elliptischen Generator des Pulsatorgetriebes, der auf den Flexstator wirkt, an.

Die Aufgabe der Erfindung ist es, eine elektrische Servolenkung, insbesondere für Kraftfahrzeuge, der im Oberbegriff des Patentanspruches 1 erläuterten Art derart zu verbessern, daß es einerseits einen geringeren radialen Einbauraum erfordert und daß es darüber hinaus kein Festlegen des Stators des Elektromotors im Fahrzeug und keine steuerbare Kupplungsanordnung zum Festlegen des Stators des Pulsatorgetriebes erfordert.

Gemäß der Erfindung wird diese Aufgabe gelöst, indem eine elektrische Servolenkung, insbesondere für Kraftfahrzeuge, der im Oberbegriff des Patentanspruches 1 erläuterten Art, die im Kennzeichenteil des Patentanspruches 1 aufgezeigten Merkmale aufweist.

Weitere Einzelheiten der Erfindung sind in den weiteren Ansprüchen erläutert.

Dadurch, daß der Stator des Elektromotors drehfest innerhalb des mit der Lenkwelle fest verbundenen, elastisch verformbaren, außenverzahnten hülsenförmigen Flexrotors des Pulsatorgetriebes angeordnet ist, der mit dem Lenkelement drehfest verbunden ist und die Stromversorgung des Elektromotors über Schleifringe oder dergleichen, z.B. Spiralkabel erfolgt, kann auf die bei der bekannten Anordnung erforderliche Festlegung des Stators des Elektromotors im Fahrzeug und auf die gesteuerte Kupplung zum Festlegen des Stators des Pulsatorgetriebes verzichtet werden, wodurch der Einbau der elektrischen Servolenkung wesentlich vereinfacht wird.

Die Erfindung wird anhand von in den Zeichnungen gezeigter Ausführungsbeispiele näher erläutert. Es zeigt:
- Fig. 1: einen schematischen Schnitt durch eine erfindungsgemäße elektrische Servolenkung in seiner Anordnung an einem als Zahnstangen/Ritzel-Getriebe ausgebildeten Lenkungsgetriebe;
- Fig. 2: einen Schnitt entlang der Linie II-II in Fig. 1;
- Fig. 3: einen schematischen Schnitt durch eine weitere Ausführungsform einer elektrischen Servolenkung mit der vertauschten Anordnung von Stator und Rotor des Pulsatorgetriebes wieder in Verbindung mit einem Zahnstangen/Ritzel-Getriebe;
- Fig. 4: einen Schnitt entlang der Linie IV-IV in Fig. 3 und
- Fig. 5: eine schematische Darstellung einer weiteren Ausführungsform einer erfindungsgemäßen elektrischen Servolenkung.

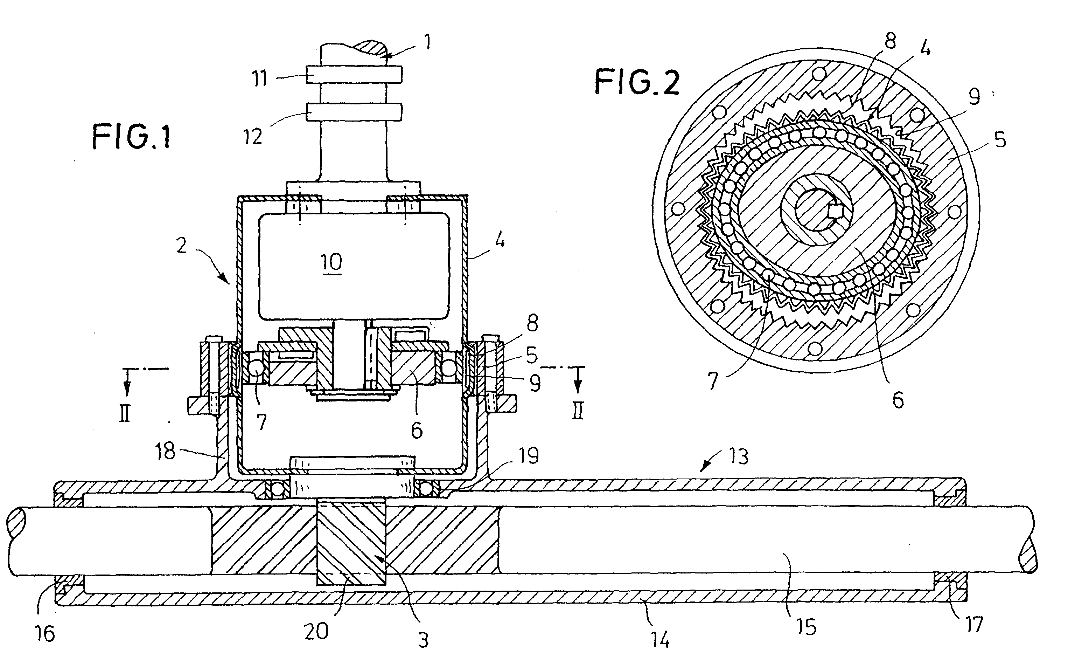

Bei der in den Figuren 1 und 2 gezeigten ersten Ausführungsform der Erfindung ist eine von einem Lenkrad (nicht gezeigt) her betätigte Lenkwelle 1 unmittelbar mit dem konzentrisch zu ihr angeordneten Pulsatorgetriebe 2 bzw. dessen Ausgangs- oder Lenkelement 3 drehfest verbunden.

Die elektrische Servolenkung mit einem Pulsatorgetriebe 2 weist somit einen Getriebeeingang in Form der Lenkwelle 1 und einen Getriebeausgang in Form des Lenkelementes 3 auf, wobei in der vorliegenden Ausführungsform der elastisch verformbare, außenverzahnte hülsenförmige Flexrotor 4 drehfest mit der Lenkwelle 1 und dem Lenkelement 3 verbunden ist.

Das Pulsatorgetriebe 2 besteht in bekannter Weise neben dem Flexrotor 4 noch aus einem innen verzahnten Ringstator 5 und einem elliptischen Generator 6, der über eine entsprechende Kugellageranordnung 7 auf den elastisch verformbaren hülsenförmigen Flexrotor 4 einwirkt, um dessen Außenverzahnung 8 in Eingriff mit der Innenverzahnung 9 des feststehenden Ringstators 5 zu bringen.

Der elliptische Generator 6 wird hierbei durch einen konzentrisch innerhalb des hülsenförmigen Flexrotors 4 angeordneten Elektromotor 10 angetrieben, der von außerhalb z.B. über Schleifringe 11 und 12 auf der Lenkwelle 1 mit entsprechend gesteuerter Stromversorgung beaufschlagt wird.

Das Pulsatorgetriebe 2 besteht weiterhin aus einem Ringstator 5, der im Fahrzeug lagefest angeordnet werden muß.

Mit Drehen des Generators 6 verlagert sich die große Ellipsenachse und damit der Zahneingriffsbereich zwischen dem Flexrotor 4 und dem Ringstator 5.

Bei festgelegtem Ringstator 5 dreht sich der Flexrotor 4 als Abtriebselement entgegengesetzt zum Antrieb.

Das eigentliche Lenkungsgetriebe 13 ist z.B. in der vorliegenden Ausführungsform als ein Zahnstangen/Ritzel-Getriebe ausgebildet, es ist jedoch selbstverständlich, daß das Ausgangselement der elektrischen Servolenkung, das Lenkelement 3, auch auf ein anderes bekanntes Lenkungsgetriebe einwirken kann.

Das Zahnstangen/Ritzel-Getriebe 13 besteht im wesentlichen aus einem Lenkungsgehäuse 14, in dem eine Zahnstange 15 in Lagern 16 und 17 axial verschiebbar angeordnet ist und weist einen Ritzelanschlußstutzen 18 auf, in dem die Lenkwelle 1 mit dem Flexrotor 4 und dem Lenkelement 3 über eine Lageranordnung 19 entsprechend drehbar gelagert ist, wobei hier das Lenkelement 3 unmittelbar als ein entsprechendes Ritzel 20 für die Zahnstange 15 ausgebildet ist.

An dem Ritzelanschlußstutzen 18 wird der Ringstator 5 des Pulsatorgetriebes 2 in geeigneter Weise, z.B. über Schrauben, drehfest festgelegt.

Wird nun über die Lenkwelle 1 ein bestimmtes Lenkmoment aufgebracht, so wird über an sich bekannte Sensoren ein Signal für das eingeleitete Lenkmoment abgegeben, das über eine entsprechende Verstärker-Schaltung dem Elektromotor 10 zugeleitet wird und diesen veranlaßt, den Generator 6 des Pulsatorgetriebes 2 in Umdrehungen zu versetzen.

Da die Lenkwelle 1 und der Flexrotor 4 mit dem Lenkelement 3 drehfest miteinander verbunden sind bzw. aus einem Stück gebildet sind, wird die sich aus der Abwälzbewegung des Flexrotors 4 innerhalb des feststehenden Ringstators 5 ergebende Hilfskraft unmittelbar auf das das Ritzel 20 bildende Lenkelement 3 zur Verschiebung der Zahnstange 15 einwirken und über die Lenkwelle 1 stellt der Fahrer durch seine Haltekraft am Lenkrad bzw. das aufgebrachte Lenkmoment das erforderliche Reak-tionsmoment zur Verfügung.

Bei einem Ausfall der elektrischen Stromversorgung bleibt die treibende Verbindung zwischen der Lenkwelle 1 über dem Flexrotor 4 zu dem Lenkelement 3 aufrechterhalten und ein Lenken des Fahrzeuges ist, wenn auch mit erhöhtern Kraftaufwand, ohne weiteres möglich. Ein selektives Lösen einer Kupplungsanordnung ist nicht erforderlich.

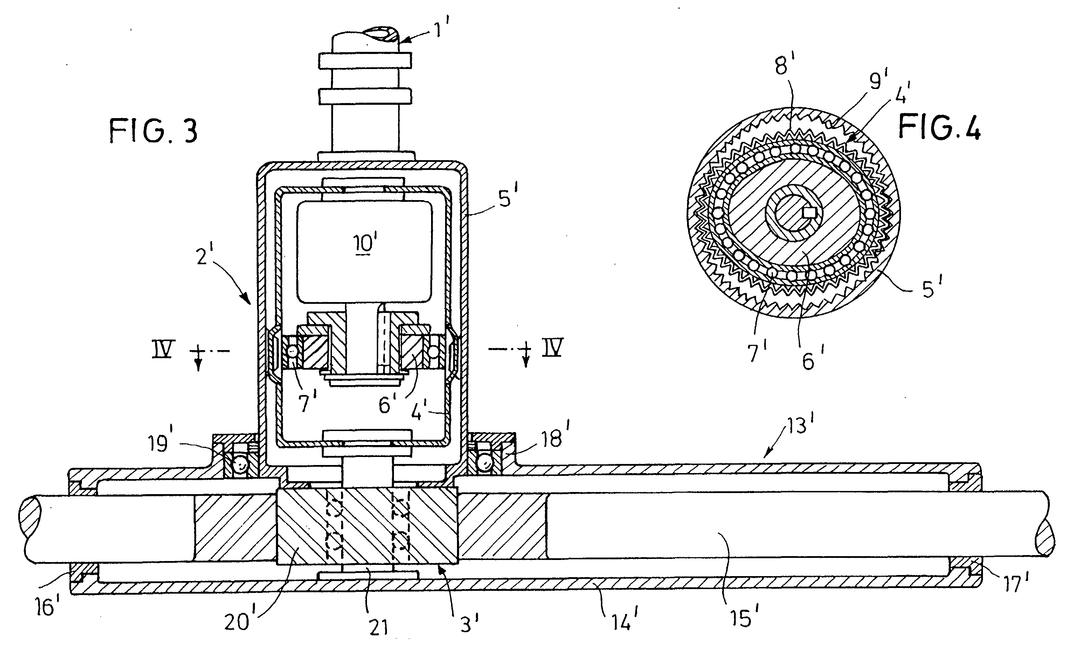

Bei der in den Figuren 3 und 4 gezeigten Ausführungsform ist wieder eine Lenkwelle 1' und ein Pulsatorgetriebe 2' sowie ein Zahnstangen/Ritzel-Getriebe 13' gezeigt.

Das Pulsatorgetriebe 2' besteht hierbei diesmal aus einem flexiblen außenverzahnten Flexstator 4', der in Eingriff mit einem innenverzahnten Ringrotor 5' steht, wobei der wandernde Eingriff wieder von einem elliptischen Generator 6' über eine Wälzlageranordnung 7' bewirkt wird, um die Außenverzahnung 8' des elastisch verformbaren Flexstators 4' in wandelndem Eingriff mit der Innenverzahnung 9' des drehbar angeordneten Ringrotors 5' zu bringen.

Bei der vorliegenden Ausführungsform ist der elastisch verformbare Flexstator 4' über einen Zapfen 21 an dem Lenkungsgetriebe 13' ortsfest festgelegt und die Lenkwelle 1' ist drehfest mit dem über eine Lageranordnung 19' drehbar gelagerten Ringrotor 5' verbunden, der an seinem Außenumfang mit einer Ritzelverzahnung 20' versehen ist, die unmittelbar in die entsprechende Verzahnung einer Zahnstange 15 eingreift.

Mit dieser Anordnung kann ein größerer Ritzeldurchmesser gewählt werden.

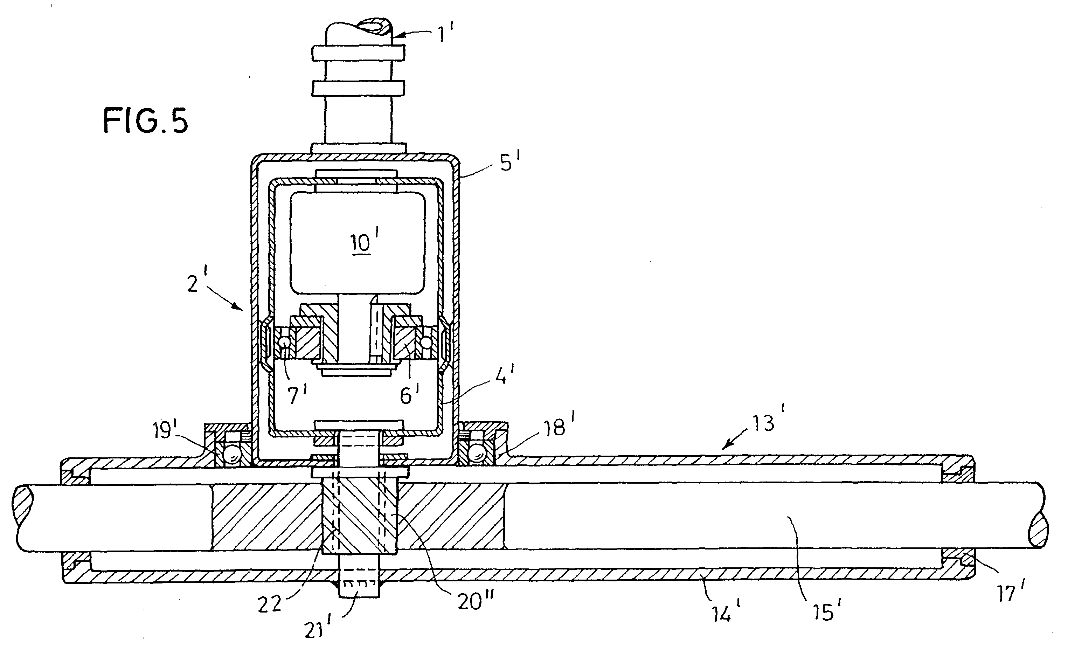

In Fig. 5 ist eine weitere Version dieser Anordnung gezeigt, bei der die zusätzliche Anbindung eines außenverzahnten Ritzels 20", das in die Verzahnung der Zahnstange 15, 15', eingreift, eine Möglichkeit schafft, die Getriebeübersetzung in einer, größeren Spanne zu variieren. Die stationäre Abstützung des Flexstators 4' erfolgt wieder über einen am Lenkungsgehäuse festgelegten Zapfen 21'. Der Zapfen 21' bildet über eine Lagerbuchse 22 eine Abstützung für das mit Ringrotor 5' verbundene Ritzel 20".

Der Elektromotor 10' zum Antreiben des elliptischen Generators 6' ist in beiden Ausführungsformen innerhalb des hülsenförmigen, elastisch verformbaren Flexstators 4' angeordnet und muß über geeignete Weise mit den erforderlichen Stromleitungen versorgt werden, wobei diese nunmehr, da der hülsenförmige Flexstator 4' lagefest stationär ist, über einfache Leitungsanschlüsse erfolgen kann, die z.B. über den stationären Zapfen 21 und 21' geführt werden können.

Die Servolenkung kann nicht nur, wie in den Zeichnungen dargestellt, in das Lenkungsgetriebe 13 integriert oder angebaut sein, sondern kann an beliebiger anderer Stelle des Lenkmoment-Übertragungsweges eingebaut werden.

## Patentansprüche

1. Elektrische Servolenkung, insbesondere für Kraftfahrzeuge, mit
- einer mit einem Lenkrad verbundenen Lenkwelle (1),
- einem Lenkelement (3) zur Bewegung der lenkbaren Räder des Fahrzeuges,
- einem koaxial zur Lenkwelle (1) und Lenkelement (3) angeordneten Elektromotor (10), der mit dem Lenkelement (3) mittels eines Pulsatorgetriebes (2) verbunden ist und der das Lenkelement (3) antreibt abhängig vom auf die Lenkwelle (1) wirkenden Drehmoment, welches mittels des Lenkkrades auf die Lenkwelle (1) aufgebracht wird,
- wobei das Pulsatorgetriebe (2) einen elastisch deformierbaren, außenverzahnten, hülsenförmiger Flexrotor (4) bzw. Flexstator (4'), einen innenverzahnten, den Flexrotor (4) bzw. Flexstator (4') umfassenden Ringstator (5) bzw. Ringrotor (5') und einen Generator (6) aufweist, wobei der Generator (6) den Flexrotor (4) bzw. Flexstator (4') federnd verformt so daß die Zähne des Flexrotors (4) bzw. Flexstators (4') in umlaufenden Eingriff mit der Innenverzahnung des Ringstators (5) bzw. Ringrotors (5') gebracht werden, und der Generator (6) relativ zum Flexrotor (4) bzw. Flexstator (4') durch den Elektromotor (10) angetrieben wird, der innerhalb des Flexrotors (4) bzw. Flexstators (4') angeordnet ist,
**dadurch gekennzeichnet, daß**
die Lenkwelle (1) und das Lenkelement (3) entweder durch den Flexrotor (4) oder durch den Ringrotor (5') drehfest miteinander verbunden sind derart, **daß** bei Ausfall der elektrischen Stromversorgung des Elektromotors (10) eine direkte Antriebsverbindung durch das Pulsatorgetriebe (2) aufrechterhalten bleibt.

2. Elektrische Servolenkung nach Anspruch 1,
**dadurch gekennzeichnet, daß**
der Flexrotor (4) für die Drehbewegung mit der Lenkwelle (1) und dem Lenkelement (3) verbunden und der Ringstator (5) lagefest im Fahrzeug befestigt ist.

3. Elektrische Servolenkung nach Anspruch 2,
**dadurch gekennzeichnet, daß**
die Stromversorgung des Elektromotors (10) über Schleifringe (11 und 12) oder über ein Spiralkabel erfolgt.

4. Elektrische Servolenkung nach Anspruch 2 oder 3,
**dadurch gekennzeichnet, daß**
das Lenkungsgetriebe (13) ein Zahnstangen/Ritzel-Getriebe ist, wobei das Lenkelement (3) unmittelbar das Ritzel (20) der Zahnstangenlenkung bildet.

5. Elektrische Servolenkung nach Anspruch 2, 3 oder 4,
**dadurch gekennzeichnet, daß**
der elastisch deformierbare Flexrotor (4) im Bereich oberhalb des Elektromotors (10) durch Ausnehmungen, Falten oder dergleichen begrenzt torsionsweich ausgebildet ist, um unmittelbar mit Sensoren zum Erfassen des aufgebrachten Lenkmomentes zusammenzuwirken.

6. Elektrische Servolenkung nach Anspruch 1,
**dadurch gekennzeichnet, daß**
der Flexstator (4') lagefest stationär ist und der Ringrotor (5') drehfest mit der Lenkwelle (1') und dem Lenkelement (3') verbunden ist.

7. Elektrische Servolenkung nach Anspruch 6,
**dadurch gekennzeichnet, daß**
das Lenkungsgetriebe (13') ein Zahnstangen/Ritzel-Getriebe ist und der innenverzahnte, drehbar gelagerte Ringrotor (5') an seinem Außenumfang mit einer Ritzelverzahnung (20') versehen ist, über die er unmittelbar in die Verzahnung der Zahnstange (15') eingreift.

8. Elektrische Servolenkung nach Anspruch 6,
**dadurch gekennzeichnet, daß**
das Lenkungsgetriebe (13') ein Zahnstangen/Ritzel-Getriebe ist und der innenverzahnte, drehbar gelagerte Ringrotor (5') mit einem hohlen Ritzel (20") verbunden ist, das sich über ein Gleitlager (22) am Zapfen (21') abstützt.

## Claims

1. Electrical power steering system, in particular for motor vehicles, having
- a steering shaft (1) which is connected to a steering wheel,
- a steering element (3) for moving the steerable wheels of the vehicle,
- an electric motor (10) which is arranged coaxially with respect to the steering shaft (1) and steering element (3) and is connected to the steering element (3) by means of a harmonic drive (2) and which drives the steering element (3) as a function of the torque which acts on the steering shaft (1) and is applied to the steering shaft (1) by means of the steering wheel, the harmonic drive (2) having an elastically deformable, externally toothed, sheath-shaped flexible rotor (4) respectively flexible stator (4'), an internally toothed ring stator (5) respectively ring rotor (5'), which surrounds the flexible rotor (4) respectively flexible stator (4'), and a generator (6), the generator (6) elastically deforming the flexible rotor (4) respectively flexible stator (4') so that the teeth of the flexible rotor (4) respectively flexible stator (4') are placed in rotating engagement with the internal toothing of the ring stator (5) respectively ring rotor (5'), and the generator (6) is driven relative to the flexible rotor (4) respectively flexible stator (4') by the electric motor (10) which is arranged within the flexible rotor (4) respectively flexible stator (4'),
**characterized in that** the steering shaft (1) and the steering element (3) are connected fixed in terms of rotation to one another by the flexible rotor (4) respectively by the ring rotor (5') in such a way that, if the electrical power supply of the electric motor (10) fails, a direct drive connection is maintained by means of the harmonic drive (2).

2. Electrical power steering system according to Claim 1, **characterized in that**, for the rotary movement, the flexible rotor (4) is connected to the steering shaft (1) and to the steering element (3), and the ring stator (5) is attached fixed in terms of position in the vehicle.

3. Electrical power steering system according to Claim 2, **characterized in that** the power supply of the electric motor (10) is provided via slip rings (11 and 12) or via a helical cable.

4. Electrical power steering system according to Claim 2 or 3, **characterized in that** the steering gear (13) is a rack and pinion gear, the steering element (3) directly forming the pinion (20) of the rack steering system.

5. Electrical power steering system according to Claim 2, 3 or 4, **characterized in that** the elastically deformable flexible rotor (4) is embodied so as to be torsionally weak to a limited degree in the region above the electric motor (10) by means of cut-outs, folds or the like in order to interact directly with sensors in order to sense the applied steering torque.

6. Electrical power steering system according to Claim 1, **characterized in that** the flexible stator (4') is fixed in position in a stationary fashion, and the ring rotor (5') is connected fixed in terms of rotation to the steering shaft (1') and to the steering element (3').

7. Electrical power steering system according to Claim 6, **characterized in that** the steering gear (13') is a rack and pinion gear, and the internally toothed, rotatably mounted ring rotor (5') is provided on its outer circumference with a pinion toothing (20') via which it engages directly in the toothing of the rack (15').

8. Electrical power steering system according to Claim 6, **characterized in that** the steering gear (13') is a rack and pinion gear, and the internally toothed, rotatably mounted ring rotor (5') is connected to a hollow pinion (20'') which is supported on the journal (21') via a sliding bearing (22).

## Revendications

1. Direction assistée électrique, en particulier pour véhicules à moteur, comprenant
- un arbre de direction (1) connecté à un volant de direction,
- un élément de direction (3) pour déplacer les roues du véhicule à diriger,
- un moteur électrique (10) disposé coaxialement à l'arbre de direction (1) et à l'élément de direction (3), qui est connecté à l'élément de direction (3) au moyen d'un mécanisme à pulsateur (2) et qui entraîne l'élément de direction (3) en fonction du couple agissant sur l'arbre de direction (1) qui est appliqué à l'arbre de direction (1) par le biais du volant de direction,
- le mécanisme à pulsateur (2) présentant un rotor flexible (4) ou stator flexible (4') en forme de manchon à denture externe, déformable élastiquement, un stator annulaire (5) ou rotor annulaire (5') à denture interne, entourant le rotor flexible (4) ou stator flexible (4'), et un générateur (6), le générateur (6) déformant élastiquement le rotor flexible (4) ou stator flexible (4') de sorte que les dents du rotor flexible (4) ou stator flexible (4') soient amenées en prise périphérique avec la denture interne du stator annulaire (5) ou rotor annulaire (5'), et le générateur (6) étant entraîné relativement au rotor flexible (4) ou stator flexible (4') par le moteur électrique (10) qui est disposé à l'intérieur du rotor flexible (4) ou stator flexible (4'),
**caractérisée en ce que**
l'arbre de direction (1) et l'élément de direction (3) sont connectés fixes en rotation l'un à l'autre par le rotor flexible (4) ou rotor annulaire (5') de telle sorte qu'en cas de panne d'alimentation électrique du moteur électrique (10), une connexion d'entraînement directe reste maintenue par le mécanisme à pulsateur (2).

2. Direction assistée électrique selon la revendication 1, **caractérisée en ce que** le rotor flexible (4) pour le mouvement de rotation est connecté à l'arbre de direction (1) et à l'élément de direction (3) et le stator annulaire (5) est fixé de manière fixe en position dans le véhicule.

3. Direction assistée électrique selon la revendication 2, **caractérisée en ce que** l'alimentation électrique du moteur électrique (10) s'effectue par le biais de bagues collectrices (11 et 12) ou par le biais d'un câble spiralé.

4. Direction assistée électrique selon la revendication 2 ou 3, **caractérisée en ce que** le mécanisme de direction (13) est un mécanisme à crémaillère et pignon, l'élément de direction (3) formant directement le pignon (20) de la direction à crémaillère.

5. Direction assistée électrique selon la revendication 2, 3 ou 4, **caractérisée en ce que** le rotor flexible déformable élastiquement (4) est formé de manière non-rigide en torsion, de manière limitée dans la région au-dessus du moteur électrique (10) par des évidements, des plis ou similaire, afin de coopérer directement avec des capteurs pour détecter le couple de direction appliqué.

6. Direction assistée électrique selon la revendication 1, **caractérisée en ce que** le stator flexible (4') est stationnaire de manière fixe en position et le rotor annulaire (5') est connecté fixe en rotation à l'arbre de direction (1') et à l'élément de direction (3').

7. Direction assistée électrique selon la revendication 6, **caractérisée en ce que** le mécanisme de direction (13') est un mécanisme à crémaillère et pignon et le rotor annulaire (5') à denture interne, monté rotatif, est pourvu sur sa périphérie externe d'une denture de pignon (20'), par l'intermédiaire de laquelle il vient en prise directement dans la denture de la crémaillère (15').

8. Direction assistée électrique selon la revendication 6, **caractérisée en ce que** le mécanisme de direction (13') est un mécanisme à crémaillère et pignon et le rotor annulaire (5') à denture interne, monté rotatif, est connecté à un pignon creux (20") qui s'appuie sur le tourillon (21') par l'intermédiaire d'un palier lisse (22).
